Europäisches Patentamt

European Patent Office

Office européen des brevets

(19)

(11) Publication number: **0 109 822**
**B1**

## EUROPEAN PATENT SPECIFICATION

(12)

(45) Date of publication of patent specification: **13.07.88**

(21) Application number: **83306978.4**

(22) Date of filing: **15.11.83**

(51) Int. Cl.⁴: **B 01 D 9/00, B 01 D 1/18**

(54) Spray crystallization.

(30) Priority: **17.11.82 US 442501**

(43) Date of publication of application:
**30.05.84 Bulletin 84/22**

(45) Publication of the grant of the patent:
**13.07.88 Bulletin 88/28**

(84) Designated Contracting States:
**AT BE DE FR GB IT NL SE**

(56) References cited:
**DE-A-2 739 635**
**DE-A-2 840 318**
**DE-B-1 230 402**
**DE-C- 511 115**

(73) Proprietor: **Swenson Process Equipment Inc.**
**15700 Lathrop Avenue**
**Harvey Illinois 60426 (US)**

(72) Inventor: **Rushton, William E.**
**16539 Claire Lane South Holland**
**Illinois 60473 (US)**
Inventor: **Fakatselis, Thanassi E.**
**5727 S. Grant Hinsdale**
**Illinois 60521 (US)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

EP 0 109 822 B1

## Description

The present invention generally relates to crystallization and, more particularly, to a method and apparatus for the spray crystallization of solids from liquids. In this regard, an important aspect of the present invention is directed to an evaporative spray crystallization method and apparatus which operate at atmospheric pressure and have low energy requirements and which are suitable for a wide range of industrial applications including the crystallization of potassium chloride, sodium carbonate as well as other inorganic and organic salts from liquors and slurries.

Over the years, a wide range of different methods and apparatus have been employed for the concentration of liquid solutions and the removal of the solids as crystals therefrom. Such methods and apparatus usually involve the introduction of liquids containing dissolved solids into a vessel and a portion of the liquid is evaporated from the vessel to increase the concentration of the solids in the bath and, when concentrated to the point of supersaturation, to cause crystalline solids to be formed. Evaporation may take place under either vacuum or pressure conditions or may involve the use of refrigeration techniques for cooling the liquids until they reach supersaturation and crystallization commences. Each of the aforementioned pressurization, vacuum or refrigeration methods and apparatus suffer the disadvantage of requiring elaborate and expensive ancillary equipment to support such evaporative systems. Also relatively expensive and high strength materials must be employed in, for example, the crystallizer vessel, where the vessel is either under pressure or under vacuum.

Atmospheric evaporators have also, to some extent, been employed in the past to concentrate liquid solutions or form supersaturated solutions or slurries. In these evaporators air at substantially atmospheric pressure and temperature is contacted with the liquid to be treated, usually in counterflow relationship, to elevate the temperature of the air and reduce the temperature of the liquid, thereby resulting in evaporation of some of the liquid from the solution to concentrate the solution. Such atmospheric evaporators have the advantage or reducing the need for ancillary equipment to support the methods and apparatus and also make possible the use of less expensive and thinner materials in the evaporator vessel due to the less corrosive, low temperature and atmospheric pressure conditions in the evaporator. However, scaling frequently occurs on either the flow distributing baffles which are used to increase the surface area of the liquid in the vessel or on the walls or other projections on the walls of the evaporator vessel, such as the air inlets, like the louvres seen e.g. in DE-C-511115. Such scaling presents a serious problem in crystallization applications, resulting in only limited use of such atmospheric evaporators as crystallizers, despite the important energy savings that can be obtained therewith.

The present invention overcomes the aforementioned disadvantages by providing a method and apparatus wherein atmospheric evaporative crystallization is effectively utilized without experiencing excessive scaling. As such the spray crystallization method and apparatus of this invention both eliminate the need for substantial and expensive ancillary equipment, e.g. condensors and the like, and are capable of operating at very low energy requirements.

In accordance with one aspect of the present invention, a spray crystallizer is provided which includes a vessel having a spray chamber in overlying relation to a collection basin. The spray chamber has a first opening adjacent its upper end for communicating with the atmosphere and an open lower end, and an inlet for air at ambient temperature and pressure from the atmosphere to flow upwardly through the spray chamber to exit at the first opening. The invention is characterized in that the basin and the bottoms of the spray chamber define the air inlet, and spray means such as one or more nozzles in the upper interior of the spray chamber discharge a slurry which is to be concentrated and crystallized into the air flowing through the vessel. The collection basin may have a cross-section adjacent its upper end which is larger than the cross-section of the spray chamber. The basin side wall may extend upwardly beyond the lower end of the spray chamber. In operation, means will be provided for communicating the spray nozzles with a source of the slurry and means is also provided for discharging slurry from the collection basin.

In accordance with another aspect of the present invention, a method for crystallizing solids from a liquid solution containing a dissolved solids portion, comprising the steps of discharging the liquid solution into a recirculating slurry stream at a temperature greater than the ambient temperature and then feeding that slurry stream by spraying into a chamber adjacent the upper end thereof, introducing air at substantially ambient temperature and atmospheric pressure upwardly through said chamber and in the substantial absence of obstructions in said chamber and in countercurrent flow through the sprayed slurry droplets which are falling through said chamber to produce evaporative concentration of the slurry and the formation of crystal particles from the dissolved solids portion of said slurry, collecting the slurry in a collection basin, and separating at least a portion of the crystal particles which are present in the slurry from said slurry.

The method and apparatus is particularly suitable for a wide range of industrial applications including the evaporative crystallization of corrosive liquors.

They are also particularly suited for the utilization of waste heat sources as the sole heat input into the system.

These and other features and advantages of the present invention will be apparent from the accompanying detailed description thereof.

In the course of this description, reference will frequently be made to the attached drawings in which:

Fig. 1 shows a schematic view of a preferred embodiment of spray crystallizer incorporating the principles of the present invention and which may be employed in practising the method of the invention; and

Fig. 2 shows a schematic view of the spray crystallizer as shown in Fig. 1 employed in combination with a series of evaporative crystallizer stages.

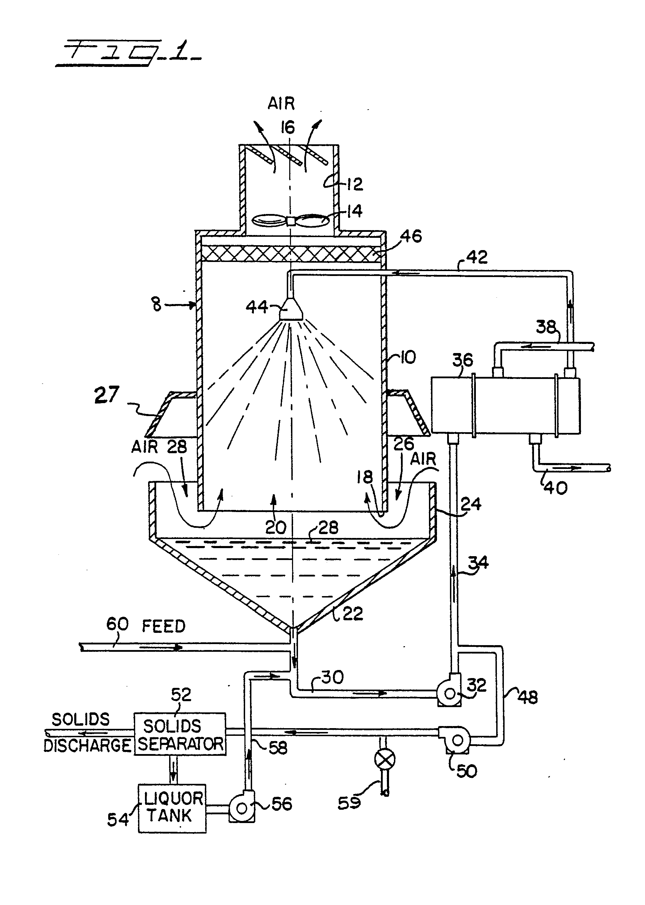

As shown in Fig. 1, an evaporative spray crystallization vessel 8 having a generally cylindrical, vertically elongate spray chamber 10 is provided which includes an opening 12 at its top. The opening 12 preferably includes a blower 14 and may include one or more vanes 16. The blower 14 draws ambient atmospheric air through the chamber and the flow rate of the air may be controlled, either by selectively regulating the speed of the blower 14, the pitch of its propellers, by opening and closing the vanes 16 or by any combination thereof.

The chamber 10 can be fabricated of carbon steel or any other suitable material and, if desired, can be internally coated with a corrosion resistant paint. The painted surface on the interior of the vessel preferably presents a smooth wall surface so as to minimize the adhesion of scale on the wall during crystallization.

In the illustrated embodiment, lower end 18 of the spray chamber is fully opened at 20 and the opening 20 is of substantially the same cross-section or diameter as the chamber over its height so as to eliminate any surfaces upon which scale might accumulate.

A collection basin 22 is positioned beneath the bottom 18 of the spray chamber to receive the slurry which is discharged through the opening 20 thereof. If desired, an agitator or other forced circulation device (not shown) can be provided in the basin 22 to maintain a uniform slurry density therein. As shown, the collection basin 22 has an open upper end defined by a side wall 24 having a cross-section which is larger than the lower end 18 of the chamber 10 to define an annular opening 26. If desired, the upper end of side wall 24 can extend above the opening 20 of the vessel to encircle the bottom 18 of the spray chamber and thereby minimize splashing or spilling of the slurry from the basin 22 and the lower end 18 of spray chamber 10. This opening communicates with the atmosphere to allow air, at atmospheric pressure and ambient temperature and humidity, to be drawn in through opening 26, and flow upwardly through the spray chamber 10 to be discharged from opening 12 at the upper end thereof. In instances wherein the crystallizer is located in an area wherein contaminants or extraneous materials can enter the annular opening 26, a suitable weather shield 27 can be positioned in overlying relation to that annular opening. Suitable apparatus (not shown) is provided to maintain the level of the slurry 28 in the collection basin 22 below the bottom 18 of the spray chamber 10 to allow for such flow of air between the surfaces of the slurry and the bottom 18 of the spray chamber.

A discharge conduit 30 extends from the collection basin 22 to a pump 32 which provides forced circulation of the slurry 28 from the basin 22 through conduit 34 to a heat exchanger 36. The heat exchanger 36 is preferably of the shell-and-tube type. A suitable heating medium is passed in and out through the heat exchanger 36 through conduits 38 and 40, respectively, to heat the slurry flowing through the heat exchanger. The heated slurry is then recirculated from the heat exchanger 36 through conduit 42 to one or more spray heads 44 located in the top of the spray chamber 10. The heated slurry is then discharged from the spray head 44 in the form of a fine droplet dispersion into the spray chamber 10 where it falls downwardly through the rising air. Preferably, the spray head is positioned and designed to insure contact of the droplets against the interior wall of the chamber, thereby assuring full utilizing of the air stream to minimized air bypassing the slurry droplets in the spray chamber 10.

In the present invention the amount of heat which must be added to the slurry in the heat exchanger 36 is relatively nominal. The temperature of the slurry may be raised about 20°F (11.1°C), but typically will be raised as little as only 5-6°F (2.8-3.3°C). This nominal temperature increase allows energy costs to be further minimized by utilizing waste heat for this purpose. For example, the heating medium entering the heat exchanger 36 through conduit 38 may be subatmospheric steam and/or vapors as well as liquid streams exhausted elsewhere in a plant.

The height of the vessel 10 will be determined by the amount of residence time necessary for the liquid solution which has been sprayed from the spray head 44 to reach, or at least approach within a desired limit or range, substantial temperature and vapor pressure equilibrium with the air which is flowing through the vessel 10. By way of example, the air, as it exits opening 12, will approach 100% relative humidity. Thus, the height of the vessel 10 should be sufficient to insure that such humidity conditions exist in the exiting air over the range of atmospheric temperature and humidities which will be encountered during operation.

As shown in FIG. 1, an entrainment separator 46 is preferably employed in the upper end of the spray chamber 10 above the spray head 44 to prevent carryover of entrained liquid. The entrainment separator should be of a design which provides high separating efficiency with a low pressure drop.

A portion of the recirculated slurry may be removed, as shown in FIG. 1, from recirculation conduit 34 through conduit 48 and pump 50 for further processing in a solids separator 52, such as a pressure filter or centrifuge or other suitable liquids-solids separation device. In the latter instance, the solids may be discharged from the system as shown in FIG. 1 and the liquor from the separator 52 collected in a liquor tank 54 from which it is pumped back to the system via pump 56 and conduit 58. Alternatively, an optional slurry discharge line 59 can be provided to enable withdrawal of the slurry from the system.

Make-up feed may be introduced at any point in the system. As shown in FIG. 1, the feed is introduced through a conduit 60 to the slurry which is being removed from the collection basin 22 and recirculated. In this alignment the feed will have the benefit of being heated in the heat exchanger 36. The feed can, however, also be added to conduit 42 following the heat exchanger 36.

Although it is believed that the method of the present invention, as thus far described, will be clearly understood when considering the foregoing description, a brief description of the method of operation of the spray crystallizer thus far described will follow.

The blower 14 is activated to draw air, at ambient atmospheric temperature, pressure and humidity, in through the annular opening 26, downwardly under the lower end 18 of the spray chamber 10, and will cause the air to flow upwardly through the chamber 10 and its bottom opening 20. The air will exit the chamber through the opening 12 in the top of the chamber and the flow rate of the air may be adjusted either by the blower 14, the vanes 16 or both.

Once a suitable flow rate of air is present, the feed is introduced through conduit 60 into conduit 30 wherein it is admixed with slurry from basin 22. The feed/slurry mixture is then fed to heat exchanger 36 via pump 32 and conduit 34. The slurry is heated in heat exchanger 36, as previously mentioned, and leaves the heat exchanger through conduit 42 where it is sprayed into the top of the chamber 10 via the spray head 44. Upon spraying, the slurry is uniformly dispersed in fine droplet form in the path of the air which is flowing upwardly through the vessel 10.

The dispersed slurry droplets intimately mix with the upwardly flowing air in the spray chamber 10 resulting in heat transfer from the liquid to the cooler air which is at ambient temperature and humidity conditions. Such heat transfer raises the temperature of the air. When this occurs, a portion of the liquid in the slurry will vaporize until the vapor pressure of the air and liquid reaches equilibrium, i.e. at approximately 100% relative humidity of the air. Such evaporation causes a concentration of the slurry and the formation of crystals. This concentrated slurry flows downwardly across the cross-section of the chamber and is discharged from the opening 20 into the collection basin 22. The heated and elevated humidity air passes through the entrainment separator 46 and is discharged from the top of the vessel through opening 12 by blower 14.

In the method and apparatus of the present invention, it is preferred to maintain the slurry at a relatively low solids concentration to reduce the viscosity of the slurry and the attendant higher pumping power requirements, and also to reduce wear on the pumps and spray head 44. This may be relatively easily achieved in the present invention because the conditions existing are substantially ambient atmospheric conditions. Such conditions eliminate altogether the likelihood of flashing and thereby avoid the formation of crystals due to localized increase in concentration at the orifice of the nozzle. It is preferred that the slurry concentration be maintained at 50% or less solids and, preferably, between 15% and 30%.

Once the slurry concentration reaches its desired solids percentage, a portion of the recirculating slurry is removed through conduit 48 and pump 50 and is processed as previously described. The portion of the slurry which is removed is preferably made up with new feed entering through conduit 60.

From the foregoing it will be seen that the likelihood of scaling is substantially reduced due, not only to the absence of any flow distribution devices in the vessel 10, but also the absence of louvered air intakes which have previously been a common site for the deposit of scale. The low atmospheric temperatures and pressures utilized in the method and apparatus of the present invention also reduce the likelihood of scaling and eliminate the need for expensive and maintenance intensive ancillary equipment and avoid the use of expensive materials of construction.

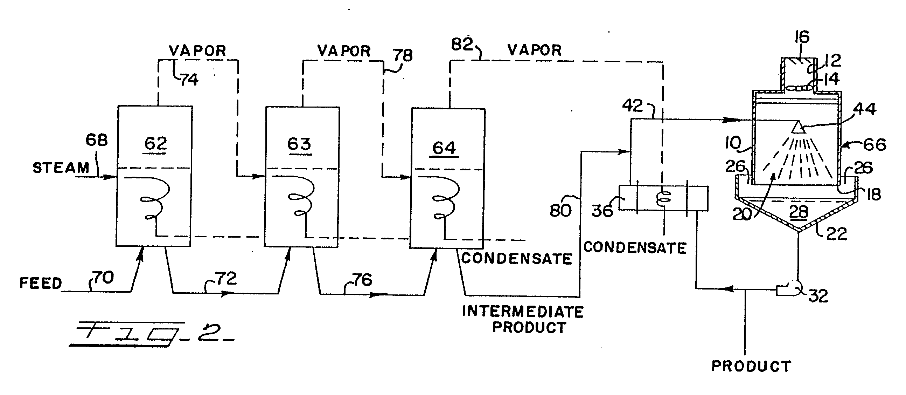

In FIG. 2, the spray crystallizer which has thus far been described is shown employed in combination with one or more convenient evaporative crystallizers 62, 63 and 64. In this combination, the spray crystallizer 66 not only functions to further crystallize the final product, but it also functions to condense the vapor from the evaporative coolers and utilizes that heat which might otherwise be wasted in the final crystallization of the product.

As shown in FIG. 2, the first evaporative crystallizer 62 includes a steam inlet 68 for heating the liquid solution in the crystallizer 62 which has been fed in through feed inlet 70 to the first evaporative crystallizer 62. Product is discharged from crystallizer 62 through product outlet 72 which becomes the feed inlet for the second evaporative crystallizer 63. Vapor is taken off of the first crystallizer 62 through vapor outlet 73 which becomes the heating medium for the second evaporative crystallizer 63. Product is discharged from crystallizer 63 through product outlet 76 which becomes the feed inlet for the last evaporative crystallizer 64. Vapor is taken off of the second crystallizer 63 through vapor outlet 78 which becomes the heating medium for crystallizer 64. Finally, intermediate product is discharged from the last of the evaporative crystallizers 64 through product outlet 80 which becomes the feed inlet for the spray crystallizer 66. As shown in FIG. 2, feed inlet 80 communicates with the slurry recirculation conduit 42 after the heat exchanger 36 where it is sprayed into vessel 10 of the spray crystallizer via spray head 44. Vapor is taken off of the last evaporative crystallizer 64 through vapor outlet 82 where it is fed to the heat exchanger 36 as the heating fluid for the recirculating slurry, thereby utilizing this otherwise wasted heat in the spray crystallization stage.

The spray crystallization described may find a wide range of applications. By way of example, it may be employed in the crystallization of potassium chloride, sodium carbonate hydrates, and anhydrous or hydrated sodium sulfate.

## Claims

1. A spray crystallizer comprising a crystallization vessel (8) which includes a spray chamber (10) in overlying relation to a collection basin (22), said spray chamber having a first opening (12) adjacent its upper end which communicates with the atmosphere and a lower end which includes a bottom (20) for the discharge of slurry from said chamber into said basin (22), an inlet for air at ambient temperature and pressure from the atmosphere to pass upwardly through said spray chamber and be exhausted therefrom through said first opening (16), characterized in that the collection basin has an open upper end (24) which, in association with the open bottom of the spray chamber, defines the air inlet, the spray means (44) being adjacent the upper end of said spray chamber for spraying a slurry into the air flowing through said vessel to be concentrated and crystallized, the spray chamber being substantially free from obstructions.

2. A spray crystallizer according to claim 1, including means (14,16) for controlling the flow of the air through said vessel.

3. The spray crystallizer according to claim 1 or claim 2, wherein the interior sidewall of said spray chamber is sized to receive the direct impingement of droplets from said spray means.

4. A spray crystallizer according to any one of the preceding claims, wherein the collection basin (22) has a cross-section adjacent its upper end (24) which is larger than that of the lower end (18) of the spray chamber (10).

5. A spray crystallizer according to claim 4 wherein the upper end (24) of the basin (22) extends upwardly beyond the lower end (18) of the chamber (10).

6. A spray crystallizer according to any one of the preceding claims, wherein means for discharging the slurry from said collection basin comprises means (34) for recirculating slurry to the spray means (44).

7. A spray crystallizer according to claim 6 including heating means (36) for heating the recirculated slurry before the recirculated slurry is returned to said spray means.

8. A spray crystallizer according to claim 7, wherein the heating means is a heat exchanger (36) having a tube side in which the recirculating slurry is heated before the recirculating slurry is returned to the spray means, the heat exchanger also having a shell side which is supplied with vapor from an evaporator vapor outlet and wherein said vapor is condensed, whereby said heat exchanger functions as a condensor for said evaporator.

9. A spray crystallizer according to any one of the preceding claims, wherein the open bottom (18) of said spray chamber is of substantially the same shape as the cross-section of said vessel (8) and has a cross-section which is at least as large as the cross-section of said spray chamber.

10. A method for crystallizing solids from a liquid solution containing a dissolved solids portion, comprising the steps of discharging the liquid solution into a recirculating slurry stream at a temperature greater than the ambient temperature and then feeding that slurry stream by spraying into a chamber adjacent the upper end thereof, introducing air at substantially ambient temperature and atmospheric pressure upwardly through said chamber and in the substantial absence of obstructions in said chamber and in countercurrent flow through the sprayed slurry droplets which are falling through said chamber to produce evaporative concentration of the slurry and the formation of crystal particles from the dissolved solids portion of said slurry, collecting the slurry in a collection basin, and separating at least a portion of the crystal particles which are present in the slurry from said slurry.

11. A method according to claim 10, wherein the recirculated slurry is heated to a maximum temperature rise of not more than about 6°F (about 3.5°C).

12. A method according to claim 10 or claim 11, wherein said slurry has a solids concentration of between 15 and 30%.

## Patentansprüche

1. Ein Sprühkristallisator umfassend ein Kristallisationsgefäß (8), das eine Sprühkammer (10) umfaßt, die einem Sammelbecken (22) überlagert ist, wobei die genannte Sprühkammer eine erste Öffnung (12) angrenzend an ihr oberes Ende aufweist, die mit der Atmosphäre in Verbindung steht, und ein unteres Ende besitzt, das einen Boden (20) für das Austragen von Aufschlämmungen bzw. Suspensionen aus der genannten Kammer in das genannte Becken (22) umfaßt, ein Einlaß für Luft bei Raumtemperatur und -druck aus der Atmosphäre vorgesehen ist, welche Luft durch die genannte Sprühkammer nach oben strömt und aus dieser durch die genannte erste Öffnung (16) ausgetragen wird, dadurch gekennzeichnet, daß das Sammelbecken ein offenes oberes Ende (24) besitzt, das in Verbindung mit dem offenen Boden der Sprühkammer den Lufteinlaß begrenzt, daß die Sprüheinrichtung (44) an das obere Ende der genannten Sprühkammer angrenzt, um eine Aufschlämmung in die durch das genannte Gefäß strömende Luft zu sprühen und sie dadurch zu konzentrieren und zu kristallisieren, und daß die Sprühkammer im wesentlichen frei von Hindernissen ist.

2. Ein Sprühkristallisator nach Anspruch 1, umfassend Einrichtungen (14,16) für die Steuerung der Strömung der Luft durch das genannte Gefäß.

3. Der Sprühkristallisator nach Anspruch 1 oder 2, worin die innere Seitenwand der genannten Sprühkammer so dimensioniert ist, daß sie den direkten Aufprall von Tröpfchen aus der genannten Sprüheinrichtung aufnimmt.

4. Ein Sprühkristallisator nach einem der vorhergehenden Ansprüche, worin das Sammelbecken (22) einen Querschnitt angrenzend an sein oberes Ende (24) aufweist, der größer ist als der Querschnitt des unteren Endes (18) der Sprühkammer (10).

5. Ein Sprühkristallisator nach Anspruch 4, worin das obere Ende (24) des Beckens (22) sich nach oben über das untere Ende (18) der Kammer (10) hinaus erstreckt.

6. Ein Sprühkristallisator nach einem der vorhergehenden Ansprüche, worin die Einrichtung für das Austragen der Aufschlämmung aus dem genannten Sammelbecken eine Einrichtung (34) zur Rezirkulation von Aufschlämmung zur Sprüheinrichtung (44) umfaßt.

7. Ein Sprühkristallisator nach Anspruch 6, umfassend eine Heizeinrichtung (36) zur Erwärmung der rezirkulierten Aufschlämmung, bevor die rezirkulierte Aufschlämmung zur Sprüheinrichtung rückgeführt wird.

8. Ein Sprühkristallisator nach Anspruch 7, worin die Heizeinrichtung ein Wärmetauscher (36) mit einer Röhrenseite ist, in der die rezirkulierte Aufschlämmung erwärmt wird, bevor sie zur Sprüheinrichtung rückgeführt wird, wobei der Wärmetauscher auch eine Mantelseite aufweist, die mit Dampf aus einem Verdampfer-Dampfauslaß gespeist wird und worin der genannte Dampf kondensiert wird, wodurch der genannte Wärmetauscher als Kondensator für den genannten Verdampfer fungiert.

9. Ein Sprühkristallisator nach einem der vorhergehenden Ansprüche, worin der offene Boden (18) der genannten Sprühkammer im wesentlichen die gleiche Form aufweist wie der Querschnitt des genannten Gefäßes (8) und einen Querschnitt besitzt, der wenigstens so groß ist wie der Querschnitt der genannten Sprühkammer.

10. Ein Verfahren zum Kristallisieren von Feststoffen aus einer flüssigen Lösung, die einen Anteil an gelösten Feststoffen enthält, umfassend die Schritte des Austragens der flüssigen Lösung in einen rezirkulierenden Aufschlämmungsstrom bei einer Temperatur, die höher ist als Raum(Umgebungs)temperatur, darauffolgendes Einspeisen des Aufschlämmungsstromes durch Einsprühen in eine Kammer angrenzend an das obere Ende derselben, Einbringen von Luft bei im wesentlichen Raum(Umgebungs)temperatur und atmosphärischem Druck nach oben durch die genannte Kammer, die im wesentlichen frei von Hindernissen ist, im Gegenstrom durch die versprühten Aufschlämmungströpfchen, die durch die genannte Kammer fallen, um eine verdampfbare Konzentration der Aufschlämmung und die Bildung von Kristallteilchen aus dem Anteil an gelösten Feststoffen in der genannten Aufschlämmung zu bilden, Sammeln der Aufschlämmung in einem Sammelbecken und Abtrennen wenigstens einer Teilmenge der in der Aufschlämmung vorliegenden Kristallteilchen aus der genannten Aufschlämmung.

11. Ein Verfahren nach Anspruch 10, worin die rezirkulierte Aufschlämmung auf einen maximalen Temperaturanstieg von nicht mehr als etwa 6°F (3,5°C) erwärmt wird.

12. Ein Verfahren nach Anspruch 10 oder 11, worin die genannte Aufschlämmung eine Feststoffkonzentration von zwischen 15 und 30 % aufweist.

**Revendications**

1. Cristallisoir par pulvérisation comprenant un récipient de cristallisation (8) qui contient une chambre de pulvérisation (10) recouvrant un bassin collecteur (22), ladite chambre de pulvérisation ayant une première ouverture (12) adjacente à son extrémité supérieure, qui communique avec l'atmosphère, et une extrémité inférieure qui contient un fond (20) pour l'évacuation d'une bouillie de ladite chambre vers ledit bassin (22), une entrée pour que l'air à température et pression ambiantes passe de l'atmosphère vers le haut à travers ladite chambre de pulvérisation pour s'en échapper à travers ladite première ouverture (16), caractérisé en ce que le bassin collecteur a une extrémité supérieure ouverte (24) qui, en association avec le fond ouvert de la chambre de pulvérisation, définit l'entrée d'air, le moyen de pulvérisation (44) étant adjacent à l'extrémité supérieure de ladite chambre de pulvérisation pour pulvériser une bouillie dans l'air s'écoulant à travers ledit récipient pour sa concentration et sa cristallisation, la chambre de pulvérisation étant sensiblement exempte d'obstructions.

2. Cristallisoir par pulvérisation selon la revendication 1, comprenant un moyen (14,16) pour contrôler l'écoulement de l'air à travers ledit récipient.

3. Cristallisoir par pulvérisation selon la revendication 1 ou la revendication 2, où la paroi latérale intérieure de ladite chambre de pulvérisation est dimensionnée pour recevoir l'impact directe des gouttelettes dudit moyen de pulvérisation.

4. Cristallisoir par pulvérisation selon l'une quelconque des revendications précédentes où le bassin collecteur (22) a une section transversale à proximité de son extrémité supérieure (24) qui est plus grande que celle de l'extrémité inférieure (18) de la chambre de pulvérisation (10).

5. Cristallisoir par pulvérisation selon la revendication 4 où l'extrémité supérieure (24) du bassin (22) s'étend vers le haut, au-delà de l'extrémité inférieure (18) de la chambre (10).

6. Cristallisoir par pulvérisation selon l'une quelconque des revendications précédentes où le moyen pour évacuer la bouillie dudit bassin collecteur comprend un moyen (34) pour la recirculation de la bouillie vers ledit moyen de pulvérisation (44).

7. Cristallisoir par pulvérisation selon la revendication 6 comprenant un moyen de chauffage (36) pour chauffer la bouillie en recirculation avant que la bouillie en recirculation ne soit ramenée audit moyen de pulvérisation.

8. Cristallisoir par pulvérisation selon la revendication 7 où le moyen de chauffage est un échangeur de chaleur (36) ayant un côté tubes où la bouillie en recirculation est chauffée avant que la bouillie en recirculation ne soit ramenée au moyen de pulvérisation, l'échangeur de chaleur ayant également un côté enveloppe qui est alimenté en vapeur d'une sortie de vapeur d'un évaporateur et où ladite vapeur est condensée, ainsi ledit échangeur de chaleur fonctionne comme un condenseur pour ledit évaporateur.

9. Cristallisoir par pulvérisation selon l'une quelconque des revendications précédentes où le fond ouvert (18) de ladite chambre de pulvérisation a sensiblement la même forme que la section transversale dudit récipient (8) et a une section transversale qui est au moins aussi grande que la section transversale de ladite chambre de pulvérisation.

10. Méthode de cristallisation de solides d'une solution liquide contenant une portion de solides dissous, comprenant les étapes d'évacuer la solution liquide dans un courant de bouillie en recirculation à une température supérieure à la température ambiante puis d'introduire le courant de bouillie, par pulvérisation, dans une chambre adjacente à son extrémité supérieure, d'introduire de l'air sensiblement à la température ambiante et à la pression atmosphérique, vers le haut, à travers ladite chambre et en l'absence sensible d'obstructions dans ladite chambre et à contrecourant à travers les gouttelettes de bouillie pulvérisées qui tombent à travers ladite chambre pour produire une concentration par évaporation de la bouillie et la formation de particules de cristaux de la partie de solides dissous de ladite bouillie, de recueillir la bouillie dans un bassin collecteur et de séparer au moins une partie des particules cristallines qui sont présentes dans la bouillie, de ladite bouillie.

11. Méthode selon la revendication 10, où la bouillie en recirculation est chauffée à une augmentation maximale de température de pas plus d'environ 6°F (environ 3,5°C).

12. Méthode selon la revendication 10 ou la revendication 11, où ladite bouillie a une concentration en solides comprise entre 15 et 30%.

Fig.1

0 109 822

1

FIG. 2.